# EUROPÄISCHE PATENTSCHRIFT

(11) **EP 1 456 559 B1**
(45) Veröffentlichungstag und Bekanntmachung des Hinweises auf die Patenterteilung: **08.02.2006**
(21) Anmeldenummer: 02798295.8
(22) Anmeldetag: 18.12.2002
(51) Int. Cl.: F16G 15/08, B66C 1/66

(54) **ANSCHLAGMITTEL**
FASTENING MEANS
MOYEN D`ACCROCHAGE

(30) Priorität: 21.12.2001 DE 10164596
(43) Veröffentlichungstag der Anmeldung: 15.09.2004
(73) Patentinhaber: RUD-Kettenfabrik Rieger & Dietz GmbH u. Co., 73432 Aalen-Unterkochen (DE)
(72) Erfinder: SMETZ, Reinhard, 86720 Baldingen (DE)
(74) Vertreter: Grünecker, Kinkeldey, Stockmair & Schwanhäusser Anwaltssozietät
(86) Internationale Anmeldenummer: PCT/DE2002/004692
(87) Internationale Veröffentlichungsnummer: WO 2003/056208

(56) Entgegenhaltungen:
- EP-A- 0 462 963
- DE-A- 4 336 779
- DE-C- 138 876
- DE-C- 3 123 175
- DE-U- 8 904 964
- DE-U- 9 308 476
- DE-U- 20 121 118
- DE-U- 20 121 120
- US-A- 2 633 375
- US-A- 5 381 650

## Beschreibung

### Technisches Gebiet

Die Erfindung betrifft ein zum Verbinden eines Gegenstandes mit einem Trag- oder Zurrmittel dienendes Anschlagmittel, das ein am Gegenstand zu befestigendes und in Bezug auf den Gegenstand gegen Relativbewegungen gesichertes Befestigungsorgan und ein gegenüber dem Befestigungsorgan drehbar gelagertes Anschlussorgan mit einem Gabelkopf aufweist, dessen Gabelzinken mit ihren Enden einen durch einen Querbolzen schließbaren Einführspalt begrenzen.

### Stand der Technik

Ein in der Praxis auch als Anschlagpunkt bezeichnetes Anschlagmittel der vorstehenden Art ist aus der Figur 10 der EP 0462963 B1 bekannt. Der Gabelkopf des Anschlussorganes dieses Anschlagmittels weist - wie allgemein üblich -zwei parallele Gabelzinken auf, deren Länge und deren Abstand voneinander ausreichend groß sind, um das Endglied eines Kettenstranges bzw. Kettenstrangabschnittes in den von den Gabelzinken begrenzten U-förmigen Einführspalt einzuhängen und dort mit Hilfe eines Querbolzens sichern zu können. Die bekannte Konstruktion vermag in sofern nicht voll zu befriedigen, als einerseits ihre im Verhältnis zur Dicke des Endgliedes des anzuschließenden Kettenstranges vergleichsweise großen Einführspalte bzw. Schlitzbreiten ungünstige Belastungen des Querbolzens zur Folge haben und weil andererseits das Anschließen von an die Spalt- bzw. Schlitzbreite angepasste abgeflachte Zonen aufweisenden Bauteilen, wie Aufhängegliedern oder Ösenhaken unmöglich ist.

### Darstellung der Erfindung

Der Erfindung liegt die Aufgabe zugrunde, ein Anschlagmittel der in Betracht gezogenen Art zu schaffen, an das im Gegensatz zu bekannten einschlägigen Anschlagmitteln nicht nur Endglieder von Kettenstrangabschnitten anschließbar sind. Diese Aufgabe wird bei einem Anschlagmittel der in Betracht gezogenen Art erfindungsgemäß dadurch gelöst, dass sich an den Einführspalt des Anschlussorganes eine im wesentlichen ringförmige Öse anschließt, deren lichte Weite größer ist als die an abgeflachte Zonen von in den Gabelkopf einführbaren Bauteilen angepasste, lichte Weite des Einführspaltes.

Das erfindungsgemäße Anschlagmittel bietet den Vorteil, dass es den direkten Anschluss von in ihren Anschlussbereichen in bekannter Weise Abflachungen aufweisenden Haken, Verkürzungsklauen, Verbindungs- und Aufhängegliedern an den Gabelkopf des Anschlussorganes ermöglicht, wobei die Beweglichkeit der in die Öse des Gabelkopfes eingehängten Teile gegenüber der Beweglichkeit eines durch den Querbolzen im Einführspalt bekannter Gabelköpfe gehaltenen Kettengliedes deutlich erhöht wird. Hinzu kommt, dass in den Fällen, in denen Trag- oder Zurrmittel unter einem Winkel am jeweiligen Gegenstand angreifen, die Kraftübertragung nicht mehr zwingend über den Querbolzen erfolgen muss, sondern zur Kraftübertragung die regelmäßig einen weit größeren Querschnitt als der jeweilige Querbolzen aufweisenden Gabelzinken genutzt werden können und dies mit dem weiteren Vorteil, dass der Angriffspunkt der Kraft näher an den zu verzurrenden oder anzuhebenden Gegenstand heranrückt.

Weitere Merkmale und Einzelheiten der Erfindung ergeben sich aus den Unteransprüchen und der nachstehenden Beschreibung mehrerer, in der beigefügten Zeichnung dargestellter Ausführungsbeispiele der Erfindung.

### Kurze Beschreibung der Zeichnungen

Es zeigen:
Figur 1 teilweise im Schnitt die Vorderansicht eines ersten Anschlagmittels;
Figur 2 die Seitenansicht des Anschlagmittels gemäß Fig. 1;
Figur 3 teilweise im Schnitt die Draufsicht auf das Anschlagmittel gemäß Fig.1 und 2;
Figur 4 die Seitenansicht eines modifizierten Anschlagmittels;
Figur 5 teilweise im Schnitt die Vorderansicht des Anschlagmittels gemäß Fig. 4;
Figur 6 einen Teilschnitt längs der Linie VI - VI in Fig. 4;
Figur 7 die Seitenansicht eines dritten Anschlagmittels;
Figur 8 teilweise im Schnitt die Vorderansicht des Anschlagmittels gemäß Fig. 7;
Figur 9 eine Draufsicht auf das Anschlagmittel gemäß Fig. 7 und 8 und
Figur 10 eine Übersicht über verschiedene an die Anschlagmittel gemäß den Fig. 1 bis 9 anschließbare und mit diesen zu einer Einheit verbindbaren Bauteilen.

### Wege zur Ausführung der Erfindung

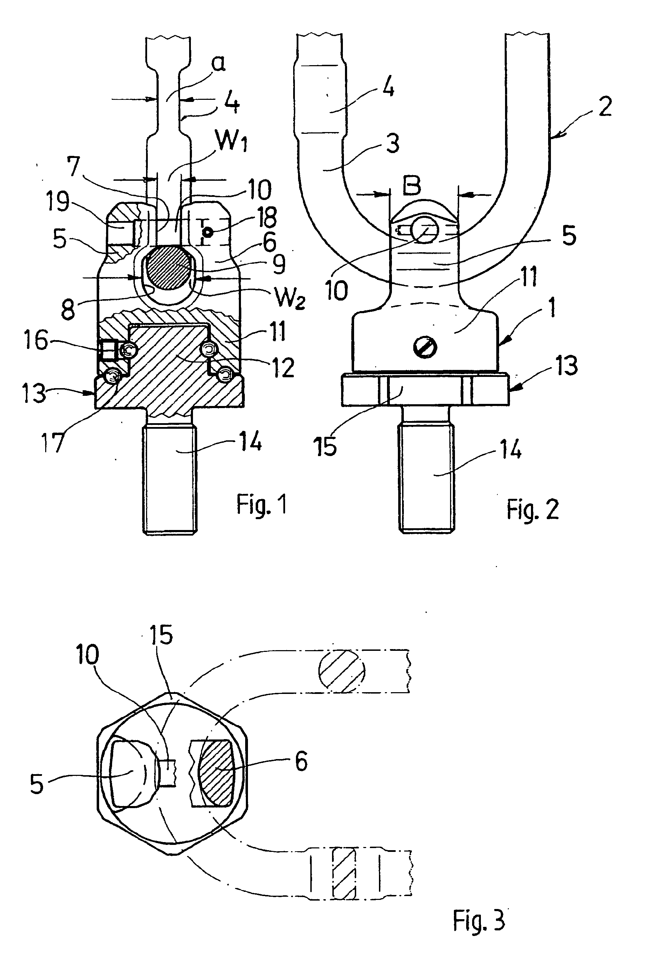

In Figur 1 ist 1 das Anschlussorgan eines Anschlagmittels, in das ein ovales Aufhängeglied 2 aus Rundstahl eingehängt ist. Das Aufhängeglied 2 weist im Bereich seines Längsschenkels 3 eine abgeflachte Zone 4 auf, deren Dicke a kleiner als die Weite W₁ eines von den Gabelzinken 5 und 6 eines Gabelkopfes begrenzten Einführspaltes 7 des Anschlussorganes 1 ist. Die innere Breite bᵢ des Aufhängegliedes 2 ist ausreichend groß, um einen am Ende eines von einem Kettenstrang, einem Gurt oder einem Seil gebildeten Zurr- oder Tragmittels angeordneten Haken aufnehmen zu können. Um den direkten Anschluss des Aufhängegliedes 2 an das Anschlussorgan 1 zu ermöglichen, geht der Einführspalt 7 in eine im Wesentlichen ringförmige Öse 8 über, deren lichte Weite W₂ mindestens gleich der 1,5fachen lichten Weite W₁ des Einführspaltes 7 ist und die hinreichend Platz für den kreisförmigen Querschnitt 9 des Buges des Aufhängegliedes 2 bietet. Die Gabelzinken 5 und 6 sind hinsichtlich ihrer Abmessungen und Form so gestaltet, dass sich das Aufhängeglied 2 je nach seiner Lage entweder - wie in den Figuren 1 und 2 gezeigt - an einem den Einführspalt 7 überbrückenden Querbolzen 10 oder aber - wie in Figur 3 angedeutet - an einer der Gabelzinken 5 oder 6 abstützen kann. Dadurch, dass die im Bereich der Öse 8 einander zugewandten Seiten der Zinken 5 und 6 - wie anhand der Zinke 6 in Figur 3 erkennbar - abgerundet sind, werden durch Kanten hervorgerufene Kerbbeanspruchungen vermieden.

Die Gabelzinken 5 und 6 werden von Vorsprüngen eines kappenförmigen Sockels 11 des Anschlussorganes 1 gebildet, der einen Zapfen 12 eines Befestigungsorganes 13 übergreift, das mit einem integralen Gewindebolzen 14 versehen ist. Zwischen dem Zapfen 12 und dem Gewindebolzen 14 befindet sich ein Ringbund 15, dessen Umfangsfläche, wie am besten aus Figur 3 erkennbar ist, die Form eines Sechskantes hat, das die Einleitung einer Drehbewegung in das Befestigungsorgan 13 erlaubt. Zur Erzielung einer hohen Drehbeweglichkeit des Anschlussorganes 1 gegenüber dem Befestigungsorgan 13 dienen zwei, Rillenkugellager bildende Wälzkörperreihen 16, 17, von denen die Wälzkörperreihe 16 gleichzeitig den Zusammenhalt zwischen dem Anschlussorgan 1 und dem Befestigungsorgan 13 sichert.

Als besonders vorteilhaft erweist es sich, die Verbindung zwischen dem Anschlussorgan 1 und dem Aufhängeglied 2 so zu gestalten, dass die vorgenannten Teile nicht ohne weiteres voneinander getrennt werden können, sondern eine Einheit bilden. Im dargestellten Fall ist der Querbolzen 10 deshalb durch eine Spannhülse 18 gesichert in einer Stufenbohrung 19 gelagert.

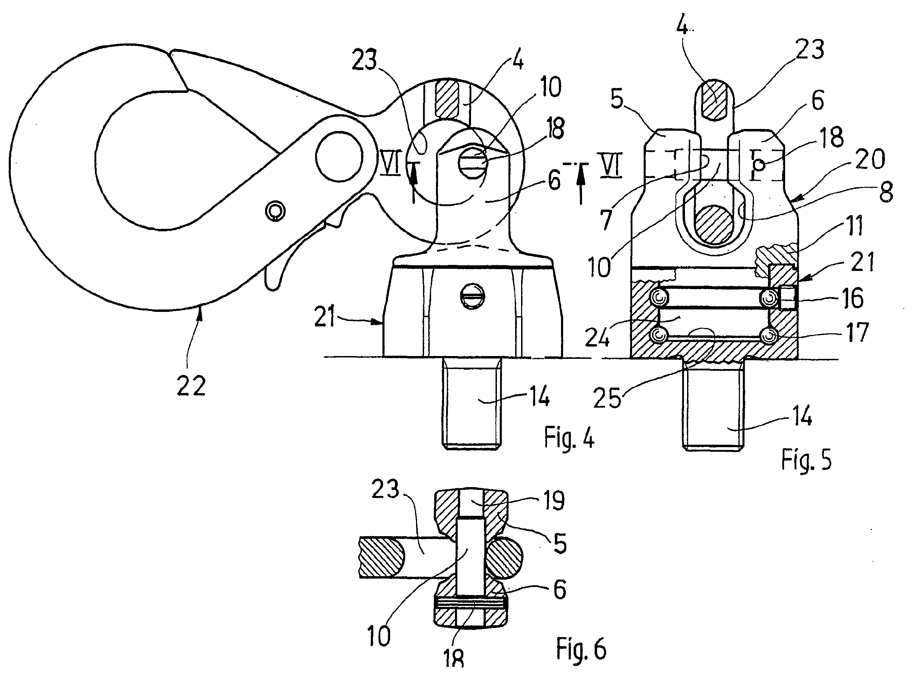

In den Figuren 4 bis 6 ist ein Anschlagmittel mit einem modifizierten Anschlussorgan 20 und einem ebenfalls modifizierten Befestigungsorgan 21 dargestellt, wobei für einander entsprechende Teile die gleichen Bezugszeichen wie in den Figuren 1 bis 3 verwendet werden. Auch bei dieser zweiten Ausführungsform ist mit dem Gabelzinken 5 und 6 aufweisenden Gabelkopf des Anschlussorganes 20 ein weiteres Bauteil in Form eines Ösenhakens 22 zu einer unverlierbaren Einheit verbunden. Die Hakenöse 23 des Ösenhakens 22 weist wie das Aufhängeglied 2 der zuvor beschriebenen Konstruktion eine abgeflachte Zone 4 auf, die die direkte Verbindung zwischen dem Ösenhaken 22 und dem Anschlussorgan 20 ermöglicht. Anders als bei der Ausführungsform gemäß den Figuren 1 bis 3 schließt sich an den die Gabelzinken 5 und 6 tragenden, hier nicht kappen-, sondern scheibenförmig ausgebildeten Sockel 11 des Anschlussorganes 20 ein Führungszapfen 24 an, der sich über zwei Wälzkörperreihen 16, 17 im Innern einer zylindrischen Ausnehmung 25 des Befestigungsorganes 21 abstützt, das wiederum mit einem integralen Gewindebolzen 14 versehen ist.

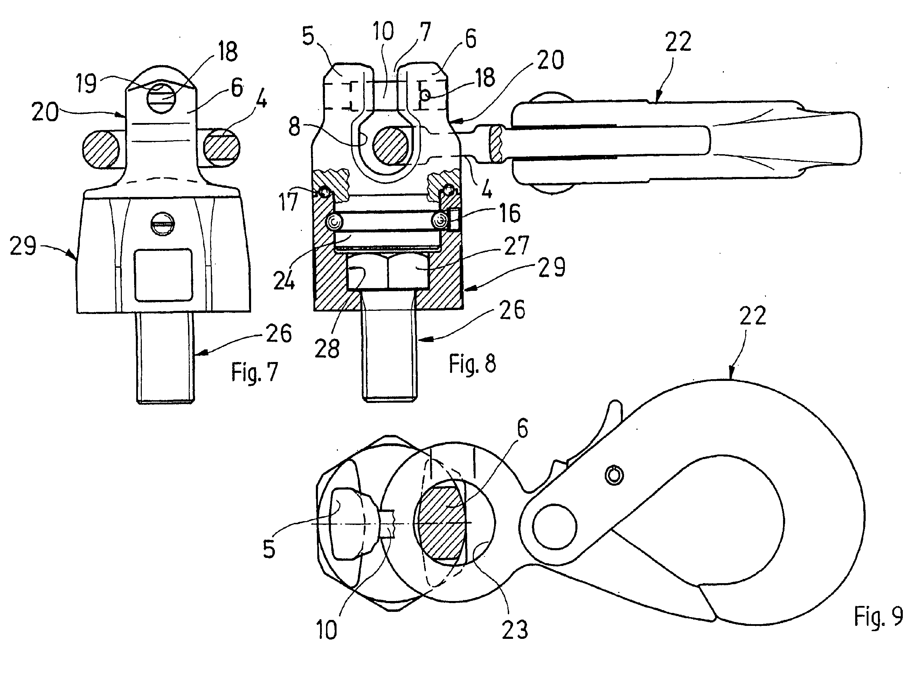

Während die zuvor beschriebenen Anschlagmittel Befestigungsorgane 13 bzw. 21 mit integralen Gewindebolzen 14 aufweisen, ist in den Figuren 7 bis 9 eine Konstruktion dargestellt, bei der das Befestigungsorgan 26 von einem Standard-Gewindebolzen gebildet wird, dessen Sechskantkopf 27 in einer ihn formschlüssig umgebenden Ausnehmung 28 eines Verbindungsorgans 29 ruht, dessen Außenkontur wie die Außenkontur des Befestigungsorgans 21 als Sechskant ausgebildet ist. Zur Reduzierung der Höhe des Zapfens 24 und zur Erhöhung der Kippfestigkeit des Anschlussorganes 20 gegenüber dem Verbindungsorgan 29 wurde eine ähnliche Anordnung der Wälzkörperreihen 16 und 17, wie bei der Ausführungsform gemäß den Figuren 1 bis 3 gewählt, d. h., das von der Wälzkörperreihe 16 gebildete Rillenkugellager wurde als Radiallager und das von der Wälzkörperreihe 17 gebildete Rillenkugellager als Axiallager ausgebildet.

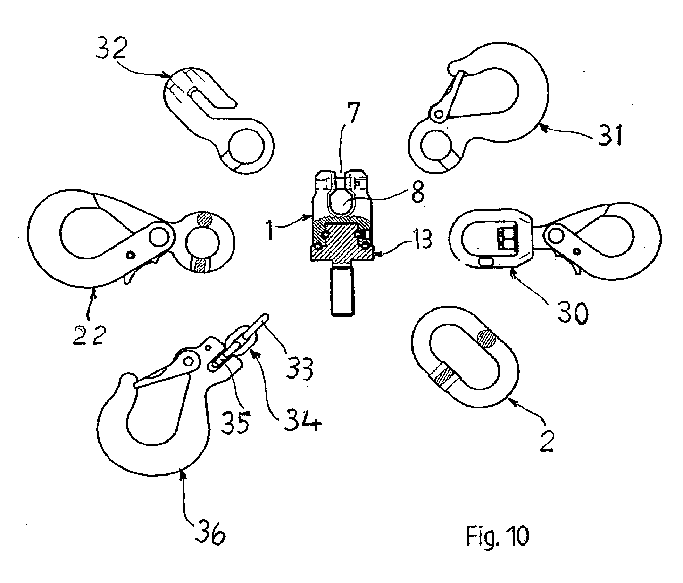

In Figur 10 sind diverse Möglichkeiten einer Kombination des Anschlagmittels gemäß den Figuren 1 bis 3 mit unterschiedlichen Bauteilen gezeigt. So können außer dem Aufhängeglied 2 und dem Ösenhaken 22, ein Winkelhaken 30, ein modifizierter Ösenhaken 31, ein Verkürzungselement 32, aber auch das eine Endglied 33 eines kurzen Kettenstrangabschnittes 34 eingehängt werden, dessen anderes Endglied 35 mit einem Haken 36 verbunden ist, der mit einem Gabelkopf nach dem Stand der Technik versehen ist. Es versteht sich, dass auch die Teile 30, 31 und 32 im Kupplungsbereich Abflachungen aufweisen müssen, die ihr Einführen in den Einführspalt 7 des im Sinne der Erfindung ausgestalteten Gabelkopfes ermöglichen.

## Patentansprüche

1. Anschlagmittel zum Verbinden eines Gegenstandes mit einem Trag- oder Zurrmittel, wobei das Anschlagmittel ein am Gegenstand zu befestigendes und in Bezug auf den Gegenstand gegen Relativbewegungen gesichertes Befestigungsorgan (13) und ein gegenüber dem Befestigungsorgan (13) drehbar gelagertes Anschlussorgan (1) mit einem Gabelkopf aufweist, dessen Gabelzinken (5, 6) mit ihren Enden einen durch einen Querbolzen (10) schließbaren Einführspalt (7) begrenzen, **dadurch gekennzeichnet, dass** sich an den Einführspalt (7) des Anschlussorganes eine im wesentlichen ringförmige Öse (8) anschließt, deren lichte Weite (W₂) größer ist als die an abgeflachte Zonen von in den Gabelkopf einführbaren Bauteilen (2; 22; 30; 31; 32) angepasste, lichte Weite (W1) des Einführspaltes (7).

2. Anschlagmittel nach Anspruch 1, **dadurch gekennzeichnet, dass** die lichte Weite (W₂) der Öse (8) mindestens gleich der 1,5fachen lichten Weite (W₁) des Einführspaltes (7) ist.

3. Anschlagmittel nach Anspruch 2, **dadurch gekennzeichnet, dass** die lichte Weite (W₂) der Öse (8) gleich der 1,8 bis 2,2fachen lichten Weite (W₁) des Einführspaltes (7) ist.

4. Anschlagmittel nach einem der Ansprüche 1 bis 3, **dadurch gekennzeichnet, dass** die Breite (B) der Gabelzinken (5, 6) im Bereich der Öse (8) gleich der 2,5 bis 3,5fachen Weite (W₁) des Einführspaltes (7) ist.

5. Anschlagmittel nach einem der Ansprüche 1 bis 4, **dadurch gekennzeichnet, dass** die im Bereich der Öse (8) einander zugewandten Seiten der Gabelzinken (5, 6) abgerundet sind.

6. Anschlagmittel nach einem der Ansprüche 1 bis 5, **dadurch gekennzeichnet, dass** die Gabelzinken (5, 6) von Vorsprüngen eines kappenförmigen Sockels (11) des Anschlussorganes (1) gebildet werden und dass der Sockel (11) das Befestigungsorgan (13) mindestens partiell übergreift.

7. Anschlagmittel nach Anspruch 6, **dadurch gekennzeichnet, dass** sich der Sockel (11) des Anschlussorganes (1) über Wälzlager (16, 17) am Befestigungsorgan (13) abstützt.

8. Anschlagmittel nach Anspruch 7, **dadurch gekennzeichnet, dass** das Befestigungsorgan (13) einen in den kappenförmigen Sockel (11) des Anschlussorganes (1) ragenden Zapfen (12) sowie einen sich an den Zapfen (12) anschließenden Ringbund (15) aufweist.

9. Anschlagmittel nach Anspruch 8, **dadurch gekennzeichnet, dass** zwischen der Innenwand des kappenartigen Sockels (11) des Anschlussorganes (1) und dem Zapfen (12) des Befestigungsorganes (13) eine erste Wälzkörperreihe (16) und zwischen der Stirnfläche des kappenförmigen Sockels (11) des Anschlussorgans (1) und dem sich an den Zapfen (12) des Befestigungsorgans (13) anschließenden Ringbund (15) eine zweite Wälzkörperreihe angeordnet ist.

10. Anschlagmittel nach einem der Ansprüche 8 oder 9, **dadurch gekennzeichnet, dass** die Umfangsfläche des sich an den Zapfen (12) des Befestigungsorganes (13) anschließenden Ringbundes (15) als Sechskant ausgebildet ist.

11. Anschlagmittel nach einem der Ansprüche 1 bis 5, **dadurch gekennzeichnet, dass** die Gabelzinken (5, 6) von Vorsprüngen eines scheibenförmigen Sockels (11) des Anschlussorganes (20) gebildet werden, der an seiner der Öse (8) abgewandten Seite einen in einer Ausnehmung (25) des Befestigungsorganes (21) gelagerten Führungszapfen (24) aufweist.

12. Anschlagmittel nach Anspruch 11, **dadurch gekennzeichnet, dass** sich das Anschlussorgan (1; 20) über Wälzlager (16, 17) am Befestigungsorgan (13; 21) abstützt.

13. Anschlagmittel nach Anspruch 12, **dadurch gekennzeichnet, dass** die Abstützung über zwei Wälzkörperreihen (16, 17) erfolgt.

14. Anschlagmittel nach Anspruch 13, **dadurch gekennzeichnet, dass** beide Wälzkörperreihen (16, 17) im Bereich der Ausnehmung (25) für den Führungszapfen (24) angeordnet sind.

15. Anschlagmittel nach Anspruch 9 oder 12, **dadurch gekennzeichnet, dass** mindestens eine Wälzkörperreihe (16) ein den Zusammenhalt zwischen dem Anschlussorgan (1; 20) und dem Befestigungsorgan (13; 21) sicherndes Rillenkugellager bildet.

16. Anschlagmittel nach einem der Ansprüche 1 bis 5, **dadurch gekennzeichnet, dass** das Anschlussorgan (20) über ein Verbindungsorgan (29) mit dem Befestigungsorgan (26) verbunden ist.

17. Anschlagmittel nach Anspruch 16, **dadurch gekennzeichnet, dass** sich das Anschlussorgan (20) über Wälzlager (16, 17) am Verbindungsorgan (29) abstützt.

18. Anschlagmittel nach Anspruch 17, **dadurch gekennzeichnet, dass** die Abstützung über zwei Wälzkörperreihen (16, 17) erfolgt.

19. Anschlagmittel nach Anspruch 18, **dadurch gekennzeichnet, dass** beide Wälzkörperreihen (16, 17) als Rillenkugellager ausgebildet sind.

20. Anschlagmittel nach einem der Ansprüche 1 bis 19, **dadurch gekennzeichnet, dass** es mit einem Haken (22) zu einer unverlierbaren Einheit verbunden ist.

21. Anschlagmittel nach einem der Ansprüche 1 bis 19, **dadurch gekennzeichnet, dass** es mit einem Aufhängeglied (2) zu einer unverlierbaren Einheit verbunden ist.

22. Anschlagmittel nach Anspruch 20 oder 21, **dadurch gekennzeichnet, dass** zur Sicherung der Unverlierbarkeit der mit dem Anschlussorgan (1; 20) jeweils zu einer Einheit verbundenen Bauteile (2; 22), der den Einführspalt (7) überbrückende Querbolzen (10) in einer durch eine Spannhülse (18) verriegelten Stufenbohrung (19) angeordnet ist.

## Claims

1. A fastening means which serves to connect an object to a carrying or lashing means and has a fastening member (13), which is to be fastened to the object and is secured against relative movements with respect to the object, and an attachment member (1), which is mounted in a manner such that it can rotate relative to the fastening member (13) and has a fork head, the fork prongs (5, 6) of which bound at their ends an insertion gap (7) which can be closed by a cross-bolt (10), **characterized in that** the insertion gap (7) of the attachment member is adjoined by an essentially annular eye (8), the inside width (W₂) of which is larger than the inside width (W₁) of the insertion gap (7), which width is matched to flattened zones of components (2; 22; 30; 31; 32) that can be inserted into the fork head.

2. The fastening means as claimed in claim 1, **characterized in that** the inside width (W₂) of the eye (8) is at least equal to 1.5 times the inside width (W₁) of the insertion gap (7) .

3. The fastening means as claimed in claim 2, **characterized in that** the inside width (W₂) of the eye (8) is equal to 1.8 to 2.2 times the inside width (W₁) of the insertion gap (7).

4. The fastening means as claimed in one of claims 1 to 3, **characterized in that** the width (B) of the fork prongs (5, 6) in the region of the eye (8) is equal to 2.5 to 3.5 times the width (W₁) of the insertion gap (7) .

5. The fastening means as claimed in one of claims 1 to 4, **characterized in that** those sides of the fork prongs (5, 6) which face each other in the region of the eye (8) are rounded.

6. The fastening means as claimed in one of claims 1 to 5, **characterized in that** the fork prongs (5, 6) are formed by projections of a cap-shaped base (11) of the attachment member (1), and **in that** the base (11) at least partially engages over the fastening member (13).

7. The fastening means as claimed in claim 6, **characterized in that** the base (11) of the attachment member (1) is supported on the fastening member (13) via rolling bearings (16, 17).

8. The fastening means as claimed in claim 7, **characterized in that** the fastening member (13) has a pin (12) which projects into the cap-shaped base (11) of the attachment member (1) and an annular collar (15) adjoining the pin (12).

9. The fastening means as claimed in claim 8, **characterized in that** a first row of rolling bodies (16) is arranged between the inside wall of the cap-like base (11) of the attachment member (1) and the pin (12) of the fastening member (13), and a second row of rolling bodies is arranged between the end surface of the cap-shaped base (11) of the attachment member (1) and the annular collar (15) adjoining the pin (12) of the fastening member (13) .

10. The fastening means as claimed in either of claims 8 and 9, **characterized in that** the circumferential surface of the annular collar (15) adjoining the pin (12) of the fastening member (13) is designed as a hexagon.

11. The fastening means as claimed in one of claims 1 to 5, **characterized in that** the fork prongs (5, 6) are formed by projections of a disk-shaped base (11) of the attachment member (20), which base has, on its side facing away from the eye (8), a guide pin (24) mounted in a recess (25) of the fastening member (21).

12. The fastening means as claimed in claim 11, **characterized in that** the attachment member (1; 20) is supported on the fastening member (13; 21) via rolling bearings (16, 17) .

13. The fastening means as claimed in claim 12, **characterized in that** the supporting takes place via two rows of rolling bodies (16, 17).

14. The fastening means as claimed in claim 13, **characterized in that** the two rows of rolling bodies (16, 17) are arranged in the region of the recess (25) for the guide pin (24).

15. The fastening means as claimed in claim 9 or 12, **characterized in that** at least one row of rolling bodies (16) forms a deep groove ball bearing ensuring that the attachment member (1; 20) and the fastening member (13; 21) are held together.

16. The fastening means as claimed in one of claims 1 to 5, **characterized in that** the attachment member (20) is connected to the fastening member (26) via a connecting member (29).

17. The fastening means as claimed in claim 16, **characterized in that** the attachment member (20) is supported on the connecting member (29) via rolling bearings (16, 17).

18. The fastening means as claimed in claim 17, **characterized in that** the supporting takes place via two rows of rolling bodies (16, 17).

19. The fastening means as claimed in claim 18, **characterized in that** the two rows of rolling bodies (16, 17) are designed as deep groove ball bearings.

20. The fastening means as claimed in one of claims 1 to 19, **characterized in that** it is connected to a hook (22) to form a captive unit.

21. The fastening means as claimed in one of claims 1 to 19, **characterized in that** it is connected to a suspension link (2) to form a captive unit.

22. The fastening means as claimed in claim 20 or 21, **characterized in that**, in order to safeguard the captive nature of the components (2; 22) connected to the attachment member (1; 20) in each case to form a unit, the cross-bolt (10) which spans the insertion gap (7) is arranged in a stepped hole (19) which is locked by means of a clamping sleeve (18).

## Revendications

1. Moyen d'accrochage pour la liaison d'un objet à un moyen de support ou d'arrimage, le moyen d'accrochage comprenant un organe de fixation (13) destiné à être fixé sur l'objet de manière à être protégé contre des mouvements relatifs par rapport à l'objet, et un organe d'accouplement (1) monté pivotant par rapport à l'organe de fixation (13) et comportant une chape dont les bras (5, 6) délimitent par leurs extrémités une fente d'insertion (7) pouvant être fermée au moyen d'un axe transversal (10),
**caractérisé en ce qu'**un oeillet (8) essentiellement annulaire se raccorde à la fente d'insertion de l'organe d'accouplement (7), la largeur utile (W₂) de l'oeillet étant supérieure à la largeur utile (W₁) de la fente d'insertion (7) adaptée à des zones aplaties d'éléments (2; 22; 30; 31; 32) pouvant être introduits dans la chape.

2. Moyen d'accrochage selon la revendication 1, **caractérisé en ce que** la largeur utile (W₂) de l'oeillet (8) est égale à au moins 1,5 fois la largeur utile (W₁) de la fente d'insertion (7).

3. Moyen d'accrochage selon la revendication 2, **caractérisé en ce que** la largeur utile (W₂) de l'oeillet (8) est égale à 1,8 à 2,2 fois la largeur utile (W₁) de la fente d'insertion (7).

4. Moyen d'accrochage selon l'une des revendications 1 à 3, **caractérisé en ce que** la largeur (B) des bras (5, 6) de la chape, au niveau de l'oeillet (8), est égale à 2,5 à 3,5 fois la largeur (W₁) de la fente d'insertion (7).

5. Moyen d'accrochage selon l'une des revendications 1 à 4, **caractérisé en ce que** les faces mutuellement opposées des bras (5, 6) de la chape sont arrondies au niveau de l'oeillet (8).

6. Moyen d'accrochage selon l'une des revendications 1 à 5, **caractérisé en ce que** les bras (5, 6) de la chape sont constituées de saillies d'une embase (11) en forme de chapeau de l'organe d'accouplement (1), et **en ce que** l'embase (11) recouvre au moins partiellement l'organe de fixation (13).

7. Moyen d'accrochage selon la revendication 6, **caractérisé en ce que** l'embase (11) de l'organe d'accouplement (1) est supportée par l'organe de fixation (13) par l'intermédiaire de roulements (16, 17).

8. Moyen d'accrochage selon la revendication 7, **caractérisé en ce que** l'organe de fixation (13) comporte un tourillon (12) faisant saillie à l'intérieur de l'embase (11) en forme de chapeau de l'organe d'accouplement (1), ainsi qu'une collerette annulaire (15) rejoignant le tourillon (12).

9. Moyen d'accrochage selon la revendication 8, **caractérisé en ce qu'**une première rangée de corps de roulement (16) est disposée entre la paroi intérieure de l'embase (11) en forme de chapeau et le tourillon (12) de l'organe de fixation (13), et qu'une deuxième rangée de corps de roulement est disposée entre la face frontale de l'embase (11) en forme de chapeau de l'organe d'accouplement (1) et la collerette annulaire (15) rejoignant le tourillon (12) de l'organe de fixation (13).

10. Moyen d'accrochage selon l'une des revendications 8 ou 9, **caractérisé en ce que** la face périphérique de la collerette annulaire (15) rejoignant le tourillon (12) de l'organe de fixation (13) est configurée en forme d'un hexagone.

11. Moyen d'accrochage selon l'une des revendications 1 à 5, **caractérisé en ce que** les bras (5, 6) de la chape sont constitués de saillies d'une embase (11) en forme de disque de l'organe d'accouplement (20), embase qui comporte, du côté opposé à l'oeillet (8), un tourillon de guidage (24) logé dans un évidement (25) de l'organe de fixation (21).

12. Moyen d'accrochage selon la revendication 11, **caractérisé en ce que** l'organe d'accouplement (1; 20) est supporté par l'organe de fixation (13; 21) par l'intermédiaire de roulements (16, 17).

13. Moyen d'accrochage selon la revendication 12, **caractérisé en ce que** le support se fait par l'intermédiaire de deux rangées de corps de roulement (16, 17).

14. Moyen d'accrochage selon la revendication 13, **caractérisé en ce que** les deux rangées de corps de roulement (16, 17) sont disposées au niveau de l'évidement (25) prévu pour le tourillon de guidage (24).

15. Moyen d'accrochage selon la revendication 9 ou 12, **caractérisé en ce qu'**au moins une rangée de corps de roulement (16) forme un roulement à billes rainuré assurant la cohésion entre l'organe d'accouplement (1; 20) et l'organe de fixation (13; 21).

16. Moyen d'accrochage selon l'une des revendications 1 à 5, **caractérisé en ce que** l'organe d'accouplement (20) est relié à l'organe de fixation (26) par l'intermédiaire d'un organe de liaison (29).

17. Moyen d'accrochage selon la revendication 16, **caractérisé en ce que** l'organe d'accouplement (20) est supporté par l'organe de liaison (29) par l'intermédiaire de roulements (16, 17).

18. Moyen d'accrochage selon la revendication 17, **caractérisé en ce que** le support se fait par l'intermédiaire de deux rangées de corps de roulement (16, 17).

19. Moyen d'accrochage selon la revendication 18, **caractérisé en ce que** les deux rangées de corps de roulement (16, 17) sont réalisées sous forme de roulements à billes rainurés.

20. Moyen d'accrochage selon l'une des revendications 1 à 19, **caractérisé en ce qu'**il est assemblé avec un crochet (22) de manière à former un ensemble imperdable.

21. Moyen d'accrochage selon l'une des revendications 1 à 19, **caractérisé en ce qu'**il est assemblé avec un organe de suspension (2) de manière à former un ensemble imperdable.

22. Moyen d'accrochage selon la revendication 20 ou 21, **caractérisé en ce que**, pour assurer l'imperdabilité des composants (2; 22) reliés à l'organe d'accouplement (1; 20) pour former un ensemble imperdable, l'axe transversal (10) traversant la fente d'insertion (7) est monté dans un alésage étagé (19) verrouillé au moyen d'une goupille creuse de serrage (18).
